Europäisches Patentamt

European Patent Office

Office européen des brevets

(19)

(11) Publication number: 0 373 570
A2

# EUROPEAN PATENT APPLICATION

(12)

(21) Application number: 89122859.5

(22) Date of filing: 11.12.89

(51) Int. Cl.⁵: G03B 17/30

(30) Priority: 12.12.88 US 282529

(43) Date of publication of application:
20.06.90 Bulletin 90/25

(84) Designated Contracting States:
AT BE CH DE ES FR GB GR IT LI LU NL

(71) Applicant: EASTMAN KODAK COMPANY
343 State Street
Rochester, New York 14650(US)

(72) Inventor: Smart, David Clinton Eastman Kodak
Company
Patent Department 343 State Street
Rochester New York 14650(US)

(74) Representative: Blickle, K. Werner, Dipl.-Ing. et
al
KODAK AKTIENGESELLSCHAFT Postfach
600345
D-7000 Stuttgart-Wangen 60(DE)

(54) Camera apparatus for loading a film cassette.

(57) In a photographic camera (101), a cassette re-
ceiving chamber (117) is configured to receive a
type of film cassette (1) having a film leader (43)
located inside the cassette shell except for a stub-
like forward portion (50) substantially shorter than
the remainder of the film leader which protrudes
from the cassette shell (3). A loading opening (135)
to the chamber is commensurate in shape with an
outline of the cassette shell and the stub-like leader
portion. The camera body (103) has an external
surface (141) that is configured with respect to the
loading opening to obstruct any film leader which
protrudes from a film cassette a length longer than
the stub-like leader portion, when it is attempted to
place that film cassette in the loading opening.

FIG. 5

## Camera Apparatus For Loading A Film Cassette

The invention relates generally to photography and particularly to apparatus for loading a film cassette into a camera.

Generally speaking, commercially available 35mm film cassettes comprise a hollow cylindrical shell having an integral throat or lipped portion which extends tangentially from the shell. A film spool on which the filmstrip is wound is freely rotatable within the cylindrical shell. The filmstrip has a leading end section, commonly referred to as a "film leader", which extends through a light-trapped slit in the throat portion to the outside of the shell. Typically, the film leader is 2-3 inches in length and is normally curled about the shell.

When loading a conventional camera with such a film cassette, a rear door of the camera is widely opened. Then, the cassette with the film leader held uncurled from around the cylindrical shell is inserted into a rear loading chamber in the camera. The manually straightened leader is positioned with its leading tip adjacent a take-up drum in the camera and with one or more of its perforations in engagement with a corresponding number of teeth of a metering sprocket located between the take-up drum and the loading chamber. This film loading operation is rather troublesome and requires a certain amount of skill and manual dexterity. Accordingly, it is rather difficult for certain people.

More recently, several bottom loading cameras have been proposed which include simple means for automatically uncurling the film leader from around the cylindrical shell as the film cassette is inserted endwise, i.e. axially, through a bottom opening to the loading chamber in the camera. For example, in commonly assigned U.S. Pat. No. 4,332,453, granted June 1, 1982, the automatic uncurling means comprises a quarter-round corner located adjacent the loading chamber in the camera and an inclined straight edge extending generally along the bottom of the camera. When a bottom door of the camera is widely opened and the cassette is initially inserted into the loading chamber, a full width (uncut) section of the film leader adjacent the throat portion of the cassette is pushed against the quarter-round corner. The quarter-round corner in turn deflects the full width section of the leader to position a reduced width (cut) section of the leader forward of the full width section crosswise against the inclined straight edge. Then, with continued insertion of the cassette into the loading chamber, the reduced width section of the leader is progressively straightened by its movement against the inclined straight edge. Thus, the film leader is progressive uncurled as the cassette is inserted axially into the loading chamber.

Although known bottom loading cameras which include automatic uncurling means for the film leader appear to work satisfactorily, the structure in the camera comprising such means may tend to increase manufacturing costs to a significant extent. Moreover, as in the case of known rear loading cameras, bottom loading cameras typically required that a door of the camera be opened before the loading can begin.

A 35mm film cassette has been proposed which, unlike conventional film cassettes, includes a film leader that does not extend outside the cassette shell. The leader, instead, is located entirely within the cassette shell. Specifically, in U.S. Pat. No. 4,423,943, granted January 3, 1984, there is disclosed a film cassette wherein the outermost convolution of the film roll wound on the film spool is radially constrained by respective circumferential lips of two axially spaced flanges of the spool to prevent the outermost convolution from contacting an inner wall of the cassette shell. The trailing end of the filmstrip is secured to the film spool, and the leading end of the filmstrip is reduced in width to allow it to protrude from between the circumferential lips and rest against the shell wall. During unwinding rotation of the film spool, the leading end of the filmstrip is advanced to and through a film passageway opening in order to exit the cassette shell. The opening has a width which is slightly less than the width of the filmstrip, thus resulting in the filmstrip being transversely bowed as it is uncoiled from the film spool, and thereby facilitating movement of the film edges under the circumferential lips of the respective flanges.

While the film cassette disclosed in U.S. Pat. No. 4,423,943 includes a non-protruding film leader which is automatically advanced to the outside of the cassette shell when the film spool is rotated in the unwinding direction, the film cassette appears to be intended to be loaded in a camera only after the film leader is advanced to protrude from the cassette shell. In the patent, it is suggested that one manually rotate the film spool relative to the cassette shell until the leader can be manually grasped and attached to a film advancing device in a photographic camera.

The invention relates to a photographic camera adapted to receive a type of film cassette having a stub-like leader portion protruding from the cassette.

More particularly, there has been devised an improved camera wherein there is provided a film cassette receiving chamber, and wherein the improvement comprises:

said cassette receiving chamber being configured to receive a type of film cassette having a film leader located inside the cassette shell except for a stub-like forward portion substantially shorter than the remainder of the film leader which protrudes from the cassette shell, and including a loading opening having a perimeter commensurate in shape with an outline of the cassette shell and the stub-like leader portion for inserting the film cassette into said chamber; and

an external surface of the camera body being configured with respect to said loading opening to obstruct any film leader which protrudes from a film cassette a length longer than the stub-like leader portion, when it is attempted to place that film cassette in said loading opening.

FIG. 1 is an exploded perspective view of a film cassette including a film leader contained within the cassette shell except for a stub-like leader portion which protrudes from the shell;

FIG. 2 is an elevation view in cross-section of the film cassette;

FIG. 3 is an end view in cross-section of the film cassette;

FIG. 4 is an elevation view in cross-section of a spool flange and spool core rotatably supported within the cassette shell;

FIG. 5 is a front perspective view of an improved camera according to a preferred embodiment of the invention, showing a cassette receiving chamber in a cassette receiving position exposed outside the camera body;

FIG. 6 is a front perspective view of the improved camera, wherein the cassette receiving chamber is in a concealed position within the camera body;

FIG. 7 is a sectional view of the cassette receiving chamber in its cassette receiving position;

FIG. 8 is a sectional view of the cassette receiving chamber in its concealed position; and

FIG. 9 is a top plan view of a loading opening to the cassette receiving chamber.

The invention is disclosed as being embodied preferably in a 35mm camera. Because the features of this type of camera are generally well known, the description which follows is directed in particular to elements forming part of or cooperating directly with the disclosed embodiment. It is to be understood, however, that other elements not specifically shown or described may take various forms known to persons of ordinary skill in the art.

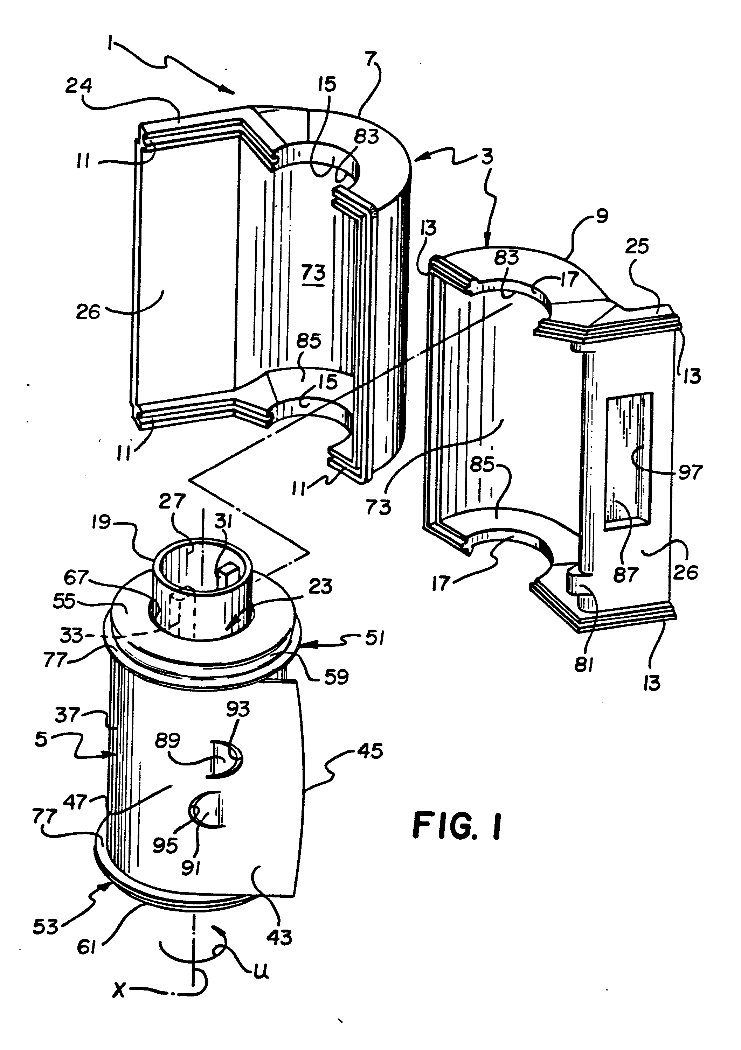

Referring now to the drawings, FIGS. 1-3 depict an improved 35mm film cassette I similar to the one disclosed in cross-referenced application Serial No. 215,705 and comprising a light-tight cassette shell 3 and a film spool 5 which is rotatable about an axis X within the cassette shell. The cassette shell 3 consists of two shell halves 7 and 9 which are mated along respective grooved and stepped edge portions 11 and 13. The mated halves 7 and 9 define upper and lower aligned openings 15 and 17 for relatively longer and shorter opposite end extensions 19 and 21 of a spool core or hub 23. Also, they include respective parallel throat portions 24 and 25 between which is formed a light-trapped film passage slit 26 to the outside of the cassette shell 3. The light-trapping means for preventing ambient light from entering the film passage slit 26, although not shown, may be a known velvet or plush material which lines the interior of the slit.

The spool core 23 as shown in FIGS. 1-3 includes relatively longer and shorter coaxial holes 27 and 29 opening at the respective longer and shorter opposite end extensions 19 and 21 of the spool core. A pair of spaced keying ribs 31 and 33 integrally formed with the spool core 23 are located within the longer coaxial hole 27, and a single keying rib 35 similarly formed with the spool core is located within the shorter coaxial hole 29. The several keying ribs 31, 33, and 35 according to custom may be engaged to rotate the film spool in an unwinding direction indicated by the arrow U in FIG. 1, or to rotate the spool in a window direction opposite to the unwinding direction.

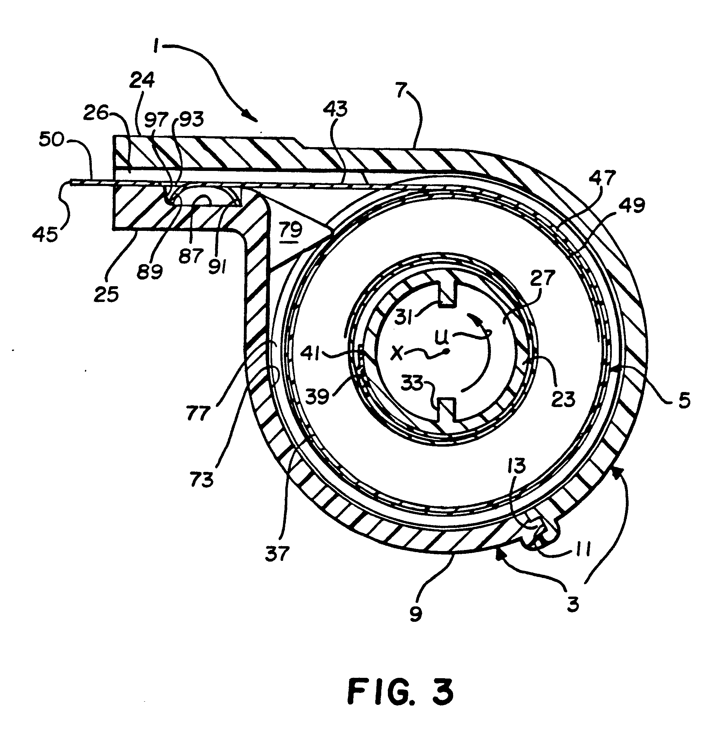

A roll 37 of convoluted 35mm film having a uniform width is wound about the spool core 23. As indicated in FIG. 3, the film roll 37 has an inner or trailing end 39 attached to the spool core 23 by a suitable piece of adhesive tape 41 and a film leader 43. The film leader 43 has a leading or forward end 455 and comprises 2-3 convolutions of the film roll 37. One of these leader convolutions is the outermost convolution 47 and another of them is the next inward succeeding convolution 49. The leader convolutions 47 and 49 are contained within the cassette shell 3. However, a stub-like forward portion 50 of the film leader 43 (substantially shorter than the leader convolutions) is located outside the cassette shell 3. Preferably, the stub-like leader portion 50 has a length of 0.6 cm. (1/4 in.) to 2.5 cm. (1 in.).

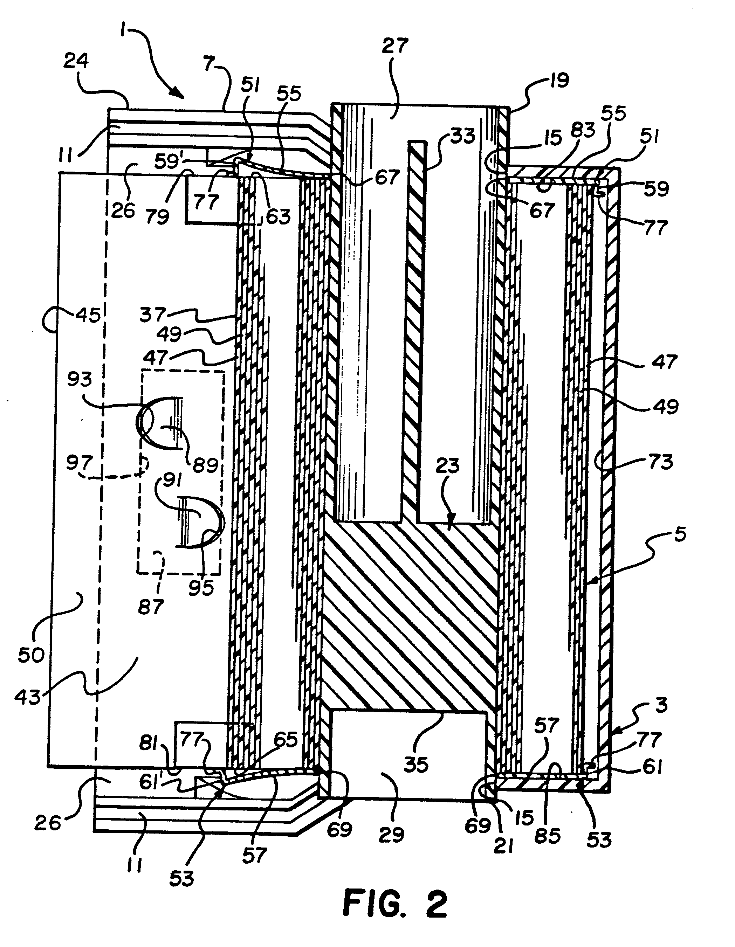

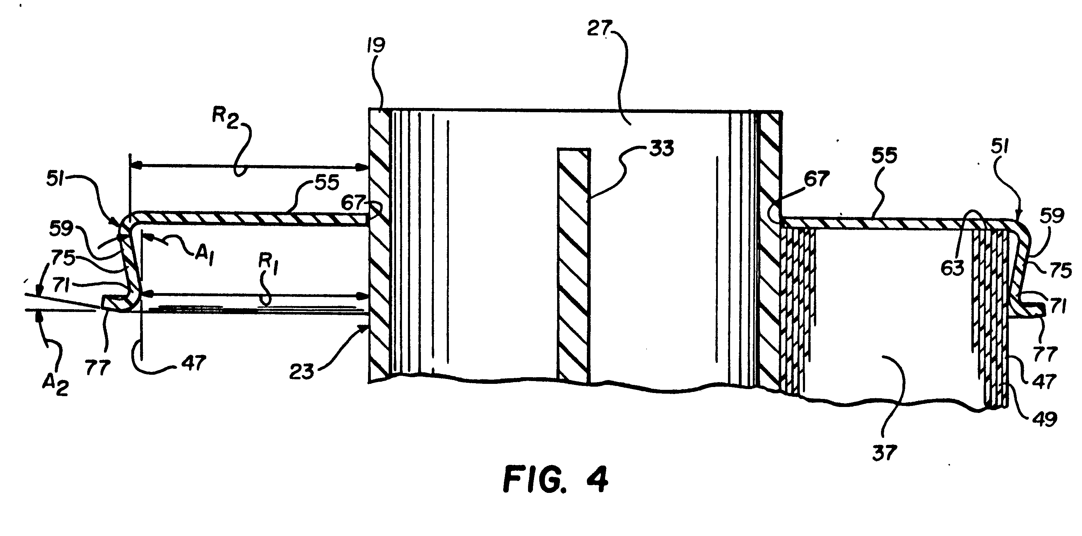

A pair of identical flanges 51 and 53 are coaxially spaced along the spool core 23 as shown in FIGS. 1 and 2. The two flanges 51 and 53 comprise respective integral disks 55 and 57 and respective integral annular lips or skirts 59 and 61 which circumferentially extend from the disks. The two disks 55 and 57 cover opposite sides, i.e. ends, 63 and 65 of the film roll 37 and they have respective central holes 67 and 69 through which the spool core 23 longitudinally extends to permit rotation of the spool core relative to the flanges 51 and 53. Each of the lips 59 and 61 as depicted in FIG. 4 includes the following:

(1) an annular constraining section 71 positioned relatively remote from one of the disks 55 and 57 a predetermined radial distance $R_1$ from the spool core 23 to enable each of the lips 59 and 61 to contact the outermost convolution 47 of the film roll 37, to radially confine the outermost convolution and thereby prevent the film roll from radially expanding or clock-springing against an inner wall 73 of the cassette shell 3;

(2) an annular relief section 75 extending from one of the disks 55 and 57 to the annular constraining section 71 of one of the lips 59 and 61 and positioned in a predetermined radial distance $R_2$ from the spool core 23, greater than the radial distance $R_1$ , to enable each of the lips to avoid contacting the outermost convolution 47 substantially between one of the disks and the annular constraining section; and

(3) an annular free end section 77 inclined radially outwardly from the annular constraining section 71 of one of the lips 59 and 61 and away from the outermost convolution 47.

The annular relief section 75 of each of the lips 59 and 61 is inclined radially inwardly from one of the disks 55 and 57 toward the outermost convolution 47 to form an acute relief angle $A_1$ with the outer most convolution. See FIG. 4. The relief angle $A_1$ may be 11°45', for example. The annular constraining section 71 of each of the lips 59 and 61 is curved radially inwardly with respect to the film roll 37 to enable both of the lips to contact the outermost convolution 47 in a substantially tangential manner (in the vertical sense in FIG. 4) and thereby limit the area of contact between the lips and the outermost convolution. The annular free end section 77 of each of the lips 59 and 61 is tilted slightly upwardly as shown in FIG. 4 to form an acute relief angle $A_2$. The relief angle $A_2$ may be 10°, for example. Thus, as shown in FIG. 2 the lips 59 and 61 are either shaped in the form of a "Z" or an "S".

A pair of rigid identical spreader surfaces 79 and 81 are fixed to the cassette half 9 at separate locations inwardly of the film passage slit 26 as shown in FIG. 2. The respective spreader surfaces 79 and 81 deflect opposite limited portions 59' and 61' of the annular lips 59 and 61 axially away from each other to an axial dimension slightly exceeding the film width. See FIG. 2. In essence, the deflected portions 59' and 61' of the annular lips 59 and 61 are axially spaced sufficiently to prevent those portions of the lips from radially confining corresponding portions of the outermost convolution 47 of the film roll 37. As indicated in FIG. 2, the remaining portions of the two lips 59 and 61 are maintained in place by inner semi-circular flat surfaces 83 and 85 of the cassette shell 3. The flat surfaces 83 and 85 abut the respective disks 55 and 56, except in the vicinity of the spreader surfaces 79 and 81. Thus, the remaining portions of the two lips 59 and 61 continue to radially confine the outermost convolution 47.

As shown in FIG. 2, the annular free end section 77 of each of the annular lips 59 and 61, at the deflected portions 59' and 61' of the two lips, bears against the respective spreader surfaces 79 and 81. Since the annular free end section 77 of each of the lips has a gentle curve to it as best seen in FIG. 4, very little wear occurs between the free end section and either of the spreader surfaces 79 and 81. The relief angle $A_2$ of the annular free end section 77 of each of the lips is useful during assembly of the film cassette 1, to position either of the spreader surfaces 79 and 81 relative to an annular free end section.

In FIGS. 1-3, it can be seen that the throat portion 25 of the shell half 9 has a rectangular-shaped recess or trap 87 formed in it at a location along the film passage slit 26. The film leader 43 includes a pair of integral side-by-side tab members 89 and 91 formed by respective u-shaped slits 93 and 95 in the film leader proximate its forward end 45. The two tab members 89 and 91 are normally inclined from the plane of the film leader 43 forwardly and rearwardly as shown in FIG. 3, and are positioned within the recess 87 to maintain the film leader in place and thereby prevent its casual forward and rearward creep along the film passage slit 26. The resistance of the two tab members 89 and 91 to displacement from the recess 87 may easily be overcome by rotating the film spool 5 to move the film leader 43. Preferably, a forward side 97 of the recess 87 is sloped as shown in FIGS. 1 and 3 to facilitate forward movement of the tab member 89 out of the recess when the film spool is rotated in the unwinding direction U.

When the spool core 23 is initially rotated in the unwinding direction U, the two flanges 51 and 53 may remain substantially stationary and the film roll 37, since its inner end 39 is attached to the spool core, tends to expand radially or clock-spring to ensure a non-slipping relation between the outermost convolution 47 of the film roll and the annular lips 59 and 61 of the flanges. Then, rotation of the spool core 23 in the same direction will similarly rotate the two flanges 51 and 53 and will urge the film leader 43 forward within the film passage slit 26. The resistance of the film leader 43 to movement, caused by the two tab members 89 and 91 of the leader being positioned within the recess 87, is easily overcome at this time. Moreover, the two spreader surfaces 79 and 81 will deflect successive portions 59' and 61' of the annular lips 59 and 61 axially away from each other as the respective portions are rotated past the spreader surfaces, thereby freeing successive portions of the outermost convolution 47 from the radial confinement of the two lips in the vicinity of the two spreader surfaces. Consequentially, continued rotation of the spool core 23 will thrust the film leader 43 along the film passage slit 26 to the outside of the cassette shell 3.

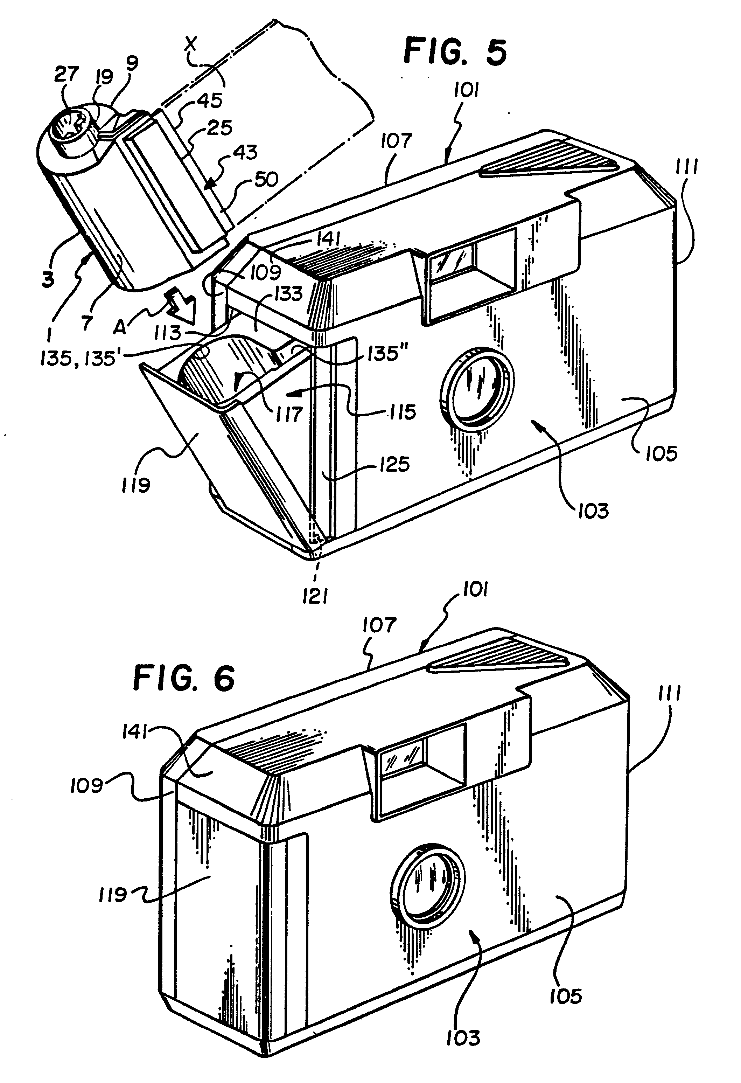

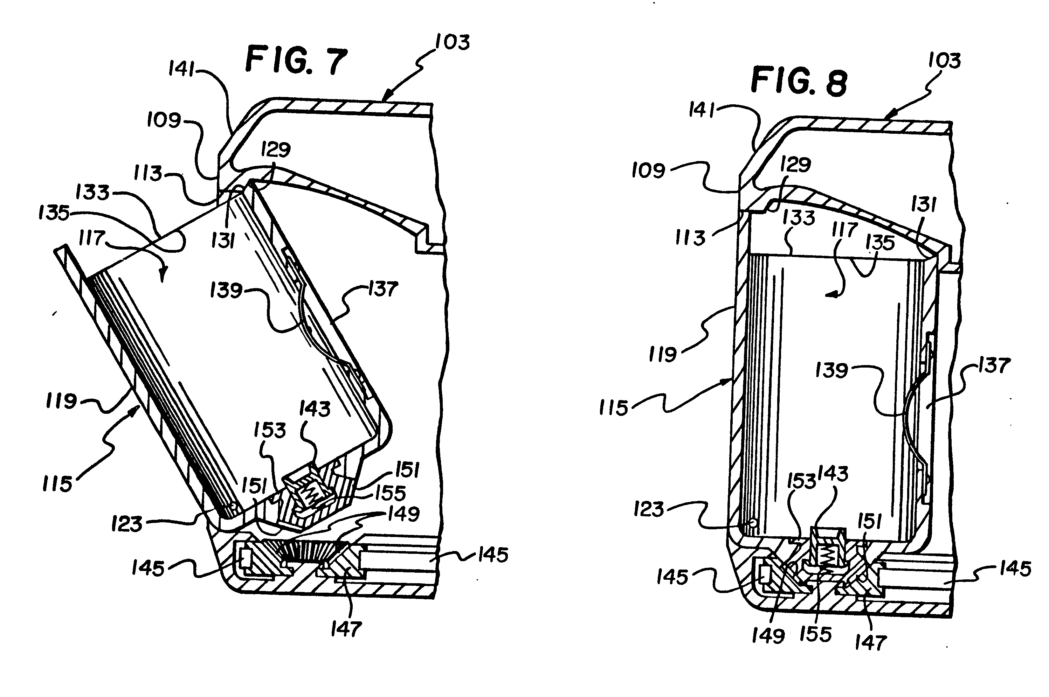

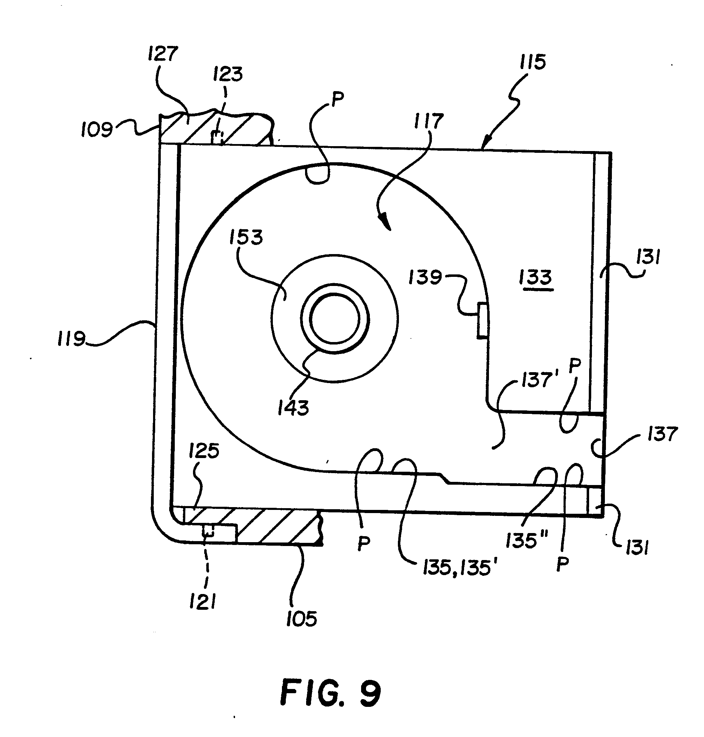

Referring now to FIGS. 5-9, an improved camera 101 is depicted for use with the film cassette 1. The camera body 103 as shown in FIG. 5 has a pair of relatively large front and rear faces 105 and 107 and a pair of opposite ends 109 and 111 located between the two faces. The opposite end 109, which is the leftward one in FIG. 5, has a rectangular-shaped opening 113 to the interior of the camera body 103. A block-like compartment or casing 115 includes a cassette receiving chamber 117 for receiving the film cassette 1 endwise, i.e. axially, in the direction indicated by the arrow A, and it includes an end cover 119 for covering the end opening 113. The compartment 115 is connected as best seen in FIG. 9 via a coaxial pair of pivot pins 121 and 123 to respective front and rear portions 125 and 127 of the camera body 103 for pivotal movement through the end opening 113 between a concealed position, illustrated in FIGS. 6 and 8, in which the cassette receiving chamber 117 is located within the interior of the camera body, and a cassette receiving position, illustrated in FIGS. 5 and 7, in which the chamber is exposed outside the end opening. Respective edges 129 and 131 of the camera body 103 and the compartment 115 engage, when the compartment is in its exposed position, to limit opening movement of the compartment. See FIG. 7. The end opening 113 is dimensioned with respect to the compartment 115 as shown in FIGS. 5 and 7 to allow only the compartment to pass through the end opening during movement of the compartment between its concealed and cassette receiving positions. In particular, a top surface 133 of the compartment 115 blocks access to the interior of the camera body 103, through the end opening 113, when the compartment is in its cassette receiving position.

The cassette receiving chamber 117 includes a loading opening 135 at the top surface 133 of the compartment 115 which consists essentially of a major aperture 135′ shaped to admit the cassette shell 3 axially in the direction A into the chamber 117 and a channel-like aperture 135″ shaped to admit the stub-like leader portion 50 (protruding from the cassette shell) edgewise into the chamber as shown in FIGS. 5 and 9. The major aperture 135′ and the channel-like aperture 135″ together have a perimeter P which is commensurate in shape with an outline of the cassette shell 3 and the stub-like leader portion 50 to facilitate entry of the shell and the leader portion into the loading opening 135. The channel-like aperture 135″ has a length, preferably within the range 1.0 cm. to 3.0 cm., which is slightly longer than the stub-like leader portion 50, and it includes opposite open ends 137 and 137′ which open respectively to the interior of the camera body 103 and to the major aperture 135′. See FIG. 9. A restraining spring 139 in the chamber 117 serves to secure the film cassette 1 within the chamber.

An external inclined surface 141 of the camera body 103 is configured with respect to the loading opening 135 to obstruct any film leader, shown in broken lines X in FIG. 5, which protrudes from a film cassette a length longer than the stub-like leader portion 50, when it is attempted to place that film cassette in the loading opening. As a result, a conventional 35mm film cassette, which is a type provided with a protruding leader having a length of 2 in. to 3 in., cannot be inserted into the chamber 117 because the external surface 141 will block the protruding leader.

As shown in FIGS. 7 and 8, a rotation shaft 143 projects from the bottom of the cassette receiving chamber 117 to engage the keying rib 35 of the film cassette 1 to rotate the spool core 23 of the film cassette in the unwinding direction U in order to thrust the non-protruding film leader 43 from the cassette shell 3 as described in detail above. Typical drive means for rotating the shaft 143 comprises an endless belt 145 which extends in driving relation about a pulley 147. The pulley 147 includes an inclined annular array of gear teeth 149 adapted to mesh with a similar array of gear teeth 151 formed on an idler wheel 153. The idler wheel 153 engages the shaft 143 to rotate the shaft, but it permits the shaft to be moved axially by a helical compression spring 155 in order to ensure that the shaft engages the keying rib 35 of the film cassette 1. Another known drive means for rotating the shaft 143 is illustrated in U.S. Pat. No. 4,363,547, granted December 14, 1982.

In operation, the compartment 115 is pivoted to its cassette receiving position, illustrated in FIGS. 5 and 7, thereby separating the array of gear teeth 151 from the array of gear teeth 149. The film cassette 1 is inserted endwise into the cassette receiving chamber 117 to engage the spool core 23 with the rotation shaft 143. Then, the compartment 115 is pivoted to its concealed position, illustrated in FIG. 8, to bring the two arrays of gear teeth 151 and 149 into engagement. Accordingly, rotation of the shaft 143 will rotate the spool core 23 to thrust the film leader 43 from the cassette shell 3.

The invention has been described with reference to a preferred embodiment. However, it will be appreciated that variations and modifications can be effected within the ordinary skill in the art without departing from the scope of the invention. For example, the compartment 115 could be supported for sliding rather than pivotal movement between its concealed and cassette receiving positions. According to a second example, the compartment 115 could be accessible at the rear face 107 of the camera body 103 rather than at the one end 109 of the camera body. According to a third example, the cassette receiving chamber 117 could be designed to receive the film cassette 1 sideways rather than endwise. According to a fourth example, the film cassette 1 need not be a 35mm type, but instead could be a variation of that type. such as 30mm, 31mm, 32mm, etc.

## Claims

1. A photographic camera (101) wherein there is provided a film cassette receiving chamber (117), is characterized in that:
said cassette receiving chamber (117) is configured to receive a type of film cassette (1) having a film leader (43) located inside the cassette shell (3) except for a stub-like forward portion (50) substantially shorter than the remainder of the film leader which protrudes from the cassette shell, and including a loading opening (135) having a perimeter commensurate in shape with an outline of the cassette shell and the stub-like leader portion for inserting the film cassette into said chamber; and
an external surface (141) of the camera body (103) is configured with respect to said loading opening (135) to obstruct any film leader which protrudes from a film cassette a length longer than the stub-like leader portion, when it is attempted to place that film cassette in said loading opening.

2. The camera (101) as recited in Claim 1, wherein said loading opening (135) consists essentially of a major aperture (135$'$) shaped to admit the cassette shell (3) of a film cassette (1) having the stub-like leader portion (50) axially into said cassette receiving chamber (117) and a channel-like aperture (135$''$) shaped to admit the stub-like leader portion edgewise into the chamber.

3. The camera (101) as recited in Claim 2, wherein said channel-like aperture (135$''$) of the loading opening (135) has a length slightly longer than the stub-like leader portion (50).

4. The camera (101) as recited in Claim 3, wherein the length of said channel-like aperture (135$''$) of the loading opening (135) is within the range 1.0 cm. to 3.0 cm.

5. The camera (101) as recited in Claim 3 or 4 wherein said channel-like aperture (135$''$) of the loading opening (135) has opposite open ends (137 and 137$'$) opening respectively to said major aperture (135$'$) of the loading opening and to the interior of said camera body (103).

6. The camera (101) as recited in Claims 1 to 5 means supporting said cassette receiving chamber (117) for movement relative to said camera body (103) between a concealed position in which said loading opening (135) is located within the camera body and a cassette receiving position in which the loading opening is located outside the camera body except that said open end (137) of the channel-like aperture (135$''$) of the loading opening which opens to the interior of said camera body remains within the camera body.

**FIG. 1**

**FIG. 2**

**FIG. 3**

FIG. 4

EP 0 373 570 A2

FIG. 5

FIG. 6

FIG.8

FIG.7

FIG. 9